# EUROPEAN PATENT SPECIFICATION

(11) **EP 0 426 484 B1**
(45) Date of publication and mention of the grant of the patent: **15.03.1995**
(21) Application number: 90312015.2
(22) Date of filing: 02.11.1990
(51) Int. Cl.: B62D 33/02

(54) **Improvements in and relating to trailer support posts**
Verbesserungen an und in Bezug auf Stützen für Anhänger
Améliorations aux et en rapport avec montants de remorques

(30) Priority: 03.11.1989 GB 8924837
(43) Date of publication of application: 08.05.1991
(73) Proprietor: AVELING BARFORD (MACHINES) PLC, GB-Lincolnshire NG31 6JE (GB)
(72) Inventor: Davis, Robert Clive Browning, Thirsk, North Yorkshire (GB)
(74) Representative: Allen, Oliver John Richard

(56) References cited:
- EP-A- 0 335 427
- AT-B- 380 837
- FR-A- 2 494 203
- GB-A- 2 209 712

## Description

This invention relates to trailers or semi-trailers and in particular to trailers or semi-trailers which have no side panels and where the roof is supported by posts at the corners of the trailer.

The roofs of such trailers and semi-trailers normally comprises a rectangular roof frame formed from bracing members or cant rails which extend between and are secured to the corner posts and a cover which is secured to the corner posts and supported by the roof frame. To provide additional support and/or to provide attachment points for load restraint members used to close off the sides of the vehicle, further vertical posts are attached to the vehicle intermediate the corner posts. The additional posts restrict the access to the vehicle interior and accordingly provision is normally made to move them when the vehicle is to be loaded or unloaded. Either the posts are releasably attached to the vehicle so that they can be actually removed therefrom or the posts are slidably suspended from a guide rail, either attached to or integral with the cant rail, so that they can be moved to one side to give maximum access to the vehicle interior. In the latter case, locking means may be provided to secure the upper end of the posts so that they can be fixed in any desired position on the vehicle.

In either case, one known arrangement for securing the lower end of the post to the trailer comprises a socket provided on the edge of the trailer bed, dimensioned to receive the post lower end and a co-operating spigot or bolt at the lower end of the additional post for securing the lower end in the socket.

When the post is to be removed or slid to the side, a steel bar is used to lift the post from the socket on the rave, the upper post end connection accommodating this movement. The operator then pulls the lower end of the post away from the trailer, rotating the post around a pivotal connection between the post top end and the roof frame. This has the disadvantage that the operator has to manhandle the long, heavy post, a difficult, strenuous and potentially dangerous operation.

A solution to this problem which has been proposed comprises providing the support post as two arms, a first arm of U or C cross-section of a length approximately equal to the distance from the base of the trailer to the roof frame, the upper end of which is either releasably secured to the frame or slidable there along, and a second shorter arm, the upper end of which is pivoted to the first arm approximately midpoint along its length. The second arm is dimensioned so that it can be received between the flanges of the first arm. The lower end of the second arm is engageable with a socket on the side rave and a latching mechanism is provided to secure the two arms together.

When the lower end of the post is to be detached from the trailer side, the latching mechanism is disengaged and the first arm pulled outwards. The pivot connection causes the second arm to lift up and out of the socket. Accordingly, the operator only has to pull outwards not upwards and the post is therefor more easily and controllably released.

Both of these arrangements, however, suffer from a number of disadvantages. Firstly, a socket has to be provided to receive the lower end of the post. This means that either a socket has to be cut into the rave, or an insert including the socket has to be attached either to the trailer bed in a gap cut into the rave or to the rave. In the first two cases the strength of the rave is reduced and in all three cases the provision of the socket of a size to receive the post lower end adds to the expense of the trailer due to the labour required and, in the last two cases, the cost of the insert.

Secondly the requirement for sockets means that the post may only be secured in a number of fixed positions which reduces the versatility of the trailer or semi-trailer.

Thirdly, known arrangements do not prevent vertical movement of the support post end in the socket. This can be due, for example, to bouncing of the vehicle on bumpy roads. Although this is not enough to disengage the end from the socket,it causes a strain on the support from which the post is suspended or to which it is attached which can seriously weaken it, especially since the load on the support will vary continuously which is a particularly detrimental type of loading.

As a result of the problems and drawbacks associated with the provision of sockets to receive the lower end of support posts, a number of different arrangements have been suggested which do not require such sockets. In one of these spigots are provided at the lower end of the second, shorter arm of a two-arm post extending downwards therefrom which are received in apertures provided in the top face of the rave of the trailer. The cooperation between the spigots and apertures, in this arrangement, is intended to prevent lateral movement of the post. The size of the apertures required is much less than that of the known sockets.

In a second suggested arrangement, described in European Patent Application 0335427, the upper face of the trailer rave is formed with a V-shaped groove. The lower end of the second arm of a two-arm post has a bar attached thereto the axis of which runs parallel to the rave. The bar locates in the groove when the post is in the vertical position. The post is thus supported by the trailer floor at any desired point therealong.

In both cases a hook is provided on the main arm of the post which latches around the rave when the post is moved into the vertical position. The hook serves to prevent vertical movement of the post relative to the rave and, in the second arrangement described above, to prevent lateral movement of the post.

The first of the above described arrangements has the disadvantage that there is still not complete freedom of post location. In both cases, the restraint provided against lateral movement is not sufficient when the hooks are not in place. In particular, with the second suggested arrangement, it has been found necessary to hold the bottom of a post down against the rave while the post is moved into the vertical position, that is, the two arms are brought together, otherwise the bar tends to slip out of location in the groove which prevents the hook from latching around the rave.

French Patent 2494203 describes a vehicle including a a two-arm post according to the features of the first part of claim 1. A pair of bars is attached to the lower end of the shorter arm. A generally C-shaped channel member is attached to the vehicle bed with the opening directed laterally. An integral flange partially closes the opening and one of the bars can be latched thereon with the post at an angle to the vertical. With the post in the vertical position, the bars abut respectively upper and lower walls of the channel.

A trailer or semi-trailer, in accordance with the invention, has at least one roof support post, the upper end of which is connectable to an upper edge of trailer or semi-trailer and the lower end of which includes means whereby it may be releasably locked to a bottom rave of the trailer to secure the post in a vertical position in which it supports the roof of the trailer or semi-trailer, the locking means cooperating with a socket provided on the bottom rave to secure the post in the roof supporting position and to prevent vertical movement of the post in that position, and the post comprising first and second arms which in the support position are both vertical, the upper end of the first arm being connectable to an upper edge of the trailer or semi-trailer and the second arm being pivotally connected, at or adjacent one end thereof, to the first arm, and a latching mechanism for securing the two arms together in vertical position, wherein the locking means is provided on the lower end of the second arm and cooperates with the socket with the post in a position at an angle to the vertical to hold the post in a desired position along the trailer as the post is moved into the vertical roof supporting position, characterised in that the locking means comprises a hook, the hook comprising a plate or bar, a first end portion of which is secured to the post and the other end portion of which is bent away at an angle to the plate or bar and then back on itself to form a generally U or V shaped head, in that the head of the hook can be latched in the socket with the post in a position at an angle to the vertical and in that the cooperation between the hook and socket is such as to prevent any lateral movement of the lower end of the post when it is in vertical position.

The arrangement has several advantages. Firstly, the hook latches in the rave socket so that there is a positive locking action. Once the hook has been latched in the socket, the post is held in the required location and prevented from twisting or swinging since the hook is positively locked in the socket and does not have a tendency to dislodge.

Secondly, the locking means comprises the hook and socket alone rather than a hook plus some other locking device. The arrangement therefore includes only a small number of parts, less than in the suggested arrangements, and is consequently relatively cheap to produce. It is also relatively simple which means that manufacturing costs are low.

The arrangement can be employed with both "ferry raves" where the raves have a Z cross-section or with standard raves which have a C cross-section.

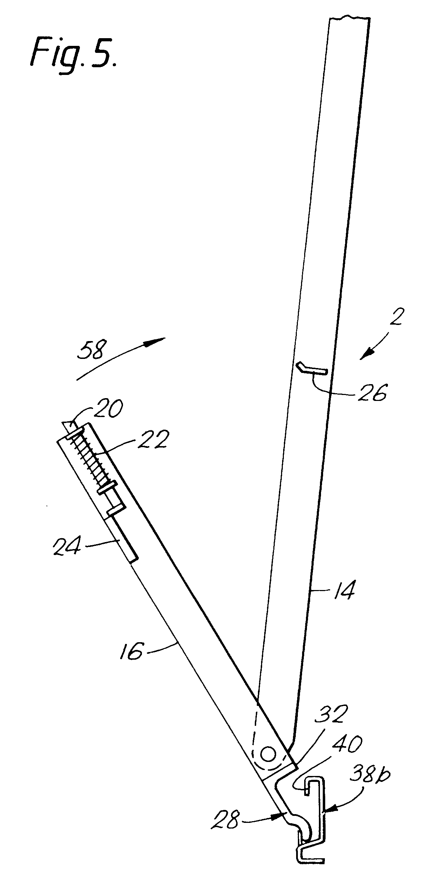

The hook comprises a plate or bar, a first end of which is secured to the post and the other end of which is bent away at an angle to the plate or bar and then back on itself so that the bent portion, which forms the head of the hook, is generally U or V shaped. The first end of the bar may be secured to the post by being connected to or formed integrally with a connecting plate attached across the bottom end of the post. In the case where the connecting plate and hook plate are integral the overall shape of the hook is preferably that of a Figure 5.

The socket may be provided on the rave by welding a plate thereto in a position to define a socket between it and the rave. The plate can extend the length of the rave so that the post can be secured in any desired position. This arrangement is particularly suitable with a ferry rave.

When a standard rave is employed, a cut-out may be formed therein through which the hook is passed. A plate is again employed, which is secured between the sections of the rave on either side of the cut-out and is so bent as to define a socket. The plate serves to help strengthen the rave which is weakened by the cut-out as well as to provide a latching socket for the hook.

The hook is suitably dimensioned such that when the post is in the vertical position its free end and either the curved head or the straight section of the plate or bar abut respectively against opposed walls, which walls comprise sections of the rave and/or the walls of the socket. This prevents any lateral movement of the post when in the vertical position.

In one embodiment the upper end of the second arm is pivotally connected to the first arm at a point approximately midway along the length thereof. In this case, to secure the post in the vertical position, the hook on the second arm is latched in the socket on the rave and the lower, free end of the first arm is pushed downwards causing it to pivot round to the upper support into a vertical position, the two arms then being latched together.

In a second embodiment, the lower end of the second arm is pivotally connected to the first arm at the lower end thereof. In this case, once the hook is latched in the socket, the free end of the second arm is pushed up and round which causes both arms to pivot into the vertical support position, the arms then being latched together.

Preferably, a safety lock member is provided on the first or second arm a portion of which, when the two arms move apart, becomes releasably secured to the other arm to limit the amount by which the two arms may be separated. This prevents the two arms from suddenly swinging widely apart which, in particular in the case where the second arm is pivoted to the lower end of the first arm, can be dangerous. When the post is moved out of the vertical position the initial force tending to separate the arms is high. The separation at this point however will be limited by the safety lock member which will resist this initial high force. The operator can then release the safety lock member and the arms will move into their final separated position in a controlled manner.

The connection between the upper end of the post and the upper edge of the trailer or semi-trailer may either be such that the post is movable along the edge when not in the support position, or such that it can be detached from the upper edge.

The invention will now be further described by way of example with reference to the accompanying drawings in which:
Figures 1 to 4 are side views of part of a trailer or semi-trailer in accordance with the invention showing a side post and a section of the bottom rave and illustrating the action of the side post safety lock member;
Figure 5 is a side view of the lower portion of another embodiment of the side post and bottom rave of Figures 1 to 4;
Figure 6 is a similar view to Figure 5 but enlarged and showing only the rave and lower end of the post, the post being the support position;
Figure 7 is a view taken in the direction arrow VII of the post and rave of Figure 6, and,
Figure 8 is a similar view to Figure 6 but with a third rave design.

The support post 2 shown in the Figures is suitable for use with a trailer or semi-trailer which has, for example, a flat bed with running gear, vertical posts mounted at each corner of the bed and cant rails extending between the top ends of the corner posts to define a roof frame. A roof is supported by and secured to the cant rails. A number of support posts, preferably at least two a side, are then suspended from the cant rails to provide additional support for the roof.

The posts 2 can be employed with other trailer arrangements, for example, one with a headboard at the forward end, a rear frame comprising two corner posts, an upper horizontal bracing post connecting the corner posts, and two doors hingedly mounted to the corner posts, and, two cant rails, one on each side extending between the headboard and the rear frame.

The support post 2 may be suspended from a guide rail and may be slidable therealong. The guide rail is generally secured to a cant rail of the trailer. This arrangement means that when the lower end of the post is free, the post 2 can be moved transversely to give unobstructed access to the interior of the trailer.

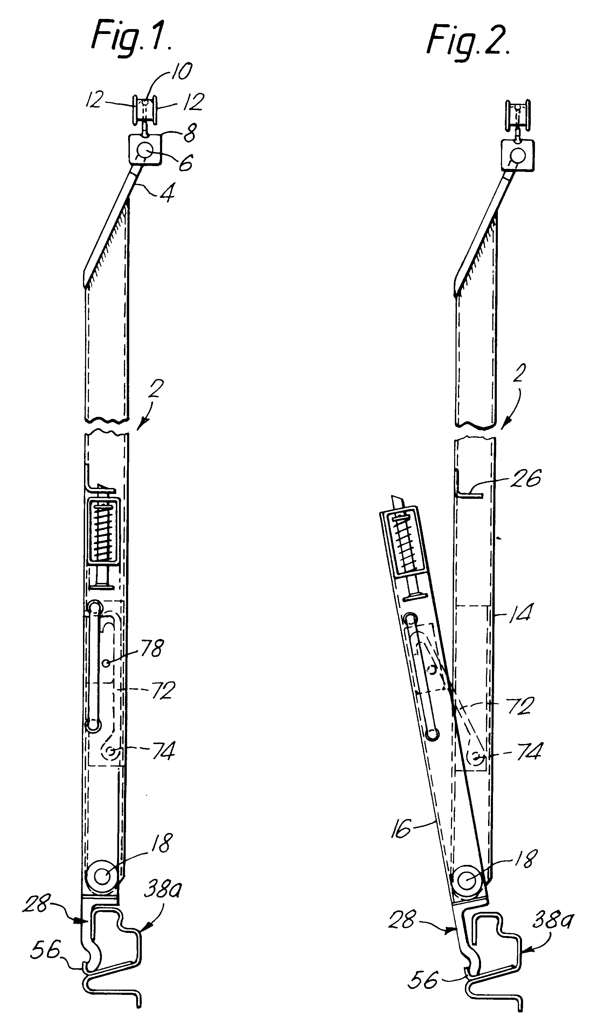

Several arrangements for slidably suspending the post 2 can be employed, but a particularly preferred arrangement is that illustrated in Figures 1 to 4.

In this arrangement, the top end of the post 2 is formed with an angled face and a bracket 4 is secured there too. The bracket 4, has, at its free edge, two arms which are welded to either end of an axle 6. The axle 6 passes through and is rotatable within an aperture provided in a rectangular truss member 8. The truss member 8 in turn is connected to a rod 10 at either end of which a pair of rollers 12 is mounted. The rollers 12 move within the guide rail attached to, or integral with, the cant rail of the trailer. The post can therefore be moved along the sides of the trailer and, when in the released position, can move laterally by rotation of the axle 6 within the truss 8.

In known arrangements the post 2 and the guide rail lie on the same vertical plane. The use of the angled bracket 4 which takes the post 2 out of the plane of the guide rail increases the load carrying capacity of the trailer.

The distance between the upper surface of the truss member 8 and the base of the guide rails and the dimensions of the rollers 12 are preferably arranged so that when the post 2 is vertical and supporting the roof, which causes the bracket 4 to move upwards, the upper surface of the truss member 8 abuts the base of the guide rails whilst the rollers 12 are lifted out of contact with the guide rails. In this way the loading due to the roof is transferred to the post 2 via the truss member 8 alone and wear and distortion of the rollers 12 is prevented.

Alternatively the upper end of the post 2 could be non-slidably but releasable secured to the cant rail so that when access to the interior of the vehicle is required it can be detached and the post removed from the trailer.

The support post 2 comprises first and second arms 14 and 16 pivotally connected together at their lower ends by a pin 18. First arm 14, whose height is approximately equal to the distance between the trailer bed and the roof frame has a rectangular hollow cross-section for strength. The second arm 16 has a U or C cross-section and is dimensioned to receive the first arm 14 between its flanges.

A latching mechanism is provided to secure the two arms 14 and 16 in an aligned position. This comprises a bolt 20 mounted on the exterior of one of the flanges of the second arm 16 and biased upwardly by a spring 22. A handle 24 is secured to the lower end of the bolt 20 which allows the bolt 20 to be moved downwards against the spring bias. A striking plate 26 is secured by welding on the exterior of the adjacent flange of the first arm 14. The end of the striking plate 26 closest to the second arm 16 is angled upwardly. As the two arms are swung together the bolt 20 comes into contact with the lower face of the inclined portion of the striking plate 26. The bolt 20 is forced downwards by the inclined portion against the spring bias and passes below the striking plate 26. The bolt 10 then springs upwards, either into an aperture in the plate 26 as shown in Figures 1 to 4 or against the far edge of the striking plate 26 as shown in Figure 5, which prevents the arms 14 and 16 from being separated. To release the arms 14 and 16 the handle 24 is pulled downwards to bring the bolt 20 below the striking plate 26 and the second arm 16 is then swung away from the first 14.

At the lower end of the second arm 16, a hook 28 is secured. The hook 28 comprises a hook plate 30 one end portion of which is connected to a transverse plate 32 which in turn is attached across the lower end face of the arm 16 by welding, see 34. The other end portion of the hook plate 30 is bent away at an angle and then back on itself to form a U or V shaped hook head 36. As shown, the hook plate 30 and connector plate 32 are preferably integral for ease of manufacture, the overall configuration then generally being that of a Figure 5.

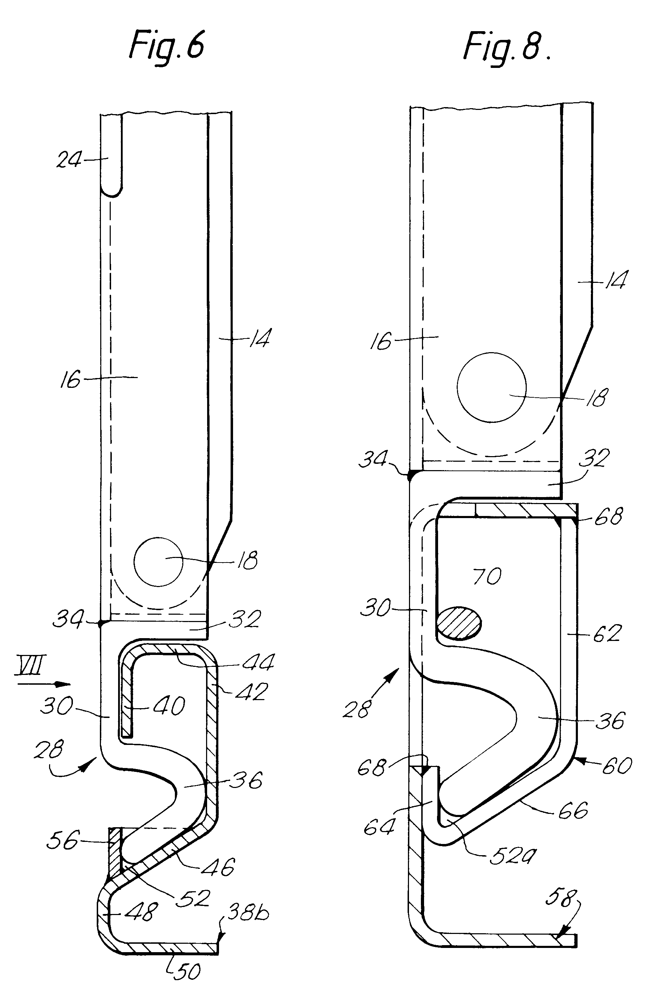

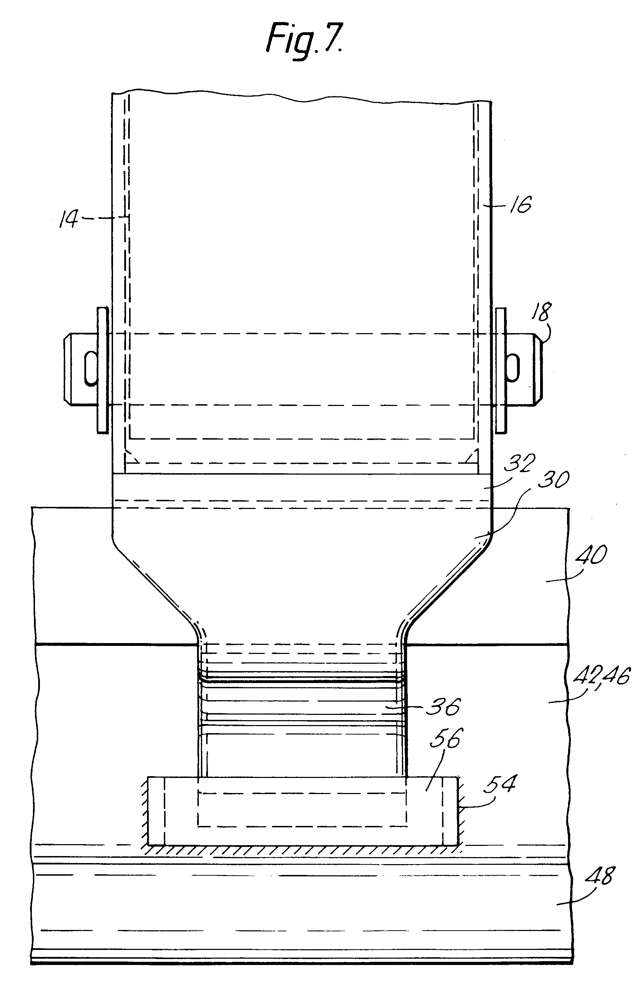

The trailer includes a rave 38 attached to its bed along each edge. The rave 38a shown in Figures 1 to 4 and the rave 38b shown in Figures 5 to 7 are similar, both having a cross-section in the form of an elongate Z with a flange 40 extending downwardly from its upper free end. More specifically the rave 38a or b has a vertical section 42 for abutment with and attachment to the trailer bed, the top of the vertical section 42 extending outwardly and downwardly to provide a horizontal face 44 and the flange 40. The bottom edge of the vertical section 42 extends downwardly firstly at an angle, as indicated at 46, then vertically, as indicated at 48, and horizontally inwardly, as indicated at 50. The rave 38a includes additional curved sections the purpose of which is not related to this invention and so they will not be described here. This type of rave is known as a ferry rave and provides an attachment point for, in particular, curtain tensioning straps in trailers where at least the sides of the trailer are, in use, covered by curtains. Such trailers are known as curtain-sided trailers. The straps have hooks which are latched round flange 40.

A socket 52 is provided on the rave 38a or b by welding, see 54, a plate 56 thereto extending upwardly from the lower vertical section 48. The socket 52 is defined between the plate 56 and the angled section 46 and vertical section 42 of the rave 38a or b. The plate 56 can extend the full length of the rave 38a or b to provide a socket 52 which extends therealong.

Alternatively, instead of providing a separate plate 56, the rave 38a or b could be so rolled as to provide an upwardly extending flange. That is, the rave would still include downwardly extending angled section 46 and vertical section 48 but intermediate these two, it would extend upwards vertically to define socket 52.

The hook 28 and socket 52 together constitute a locking means for securing the lower end of the post 2 the trailer bed the operation of which is as follows.

The post 2 is either slid into the desired position along the side or end of the trailer or attached at that position, depending on how it is mounted at its upper end. The two arms 14 and 16 are unlatched. The toe of the hook head 36 is latched into the socket 52 as shown in Figure 5. The upper end of the second arm 16 is then swung upwards, see arrow 58 to bring the arms 14, 16 together. The latch between hook 28 and the socket 52 prevents the post 2 from twisting or swinging so that the post 2 is held in the required position as the arms 14, 16 are brought together.

The upper end 16 becomes secured to the arm 14 by the action of the bolt 20 and plate 26, as described above, and the post 2 is then in a vertical roof-supporting position.

In this position, the toe of the hook 28 is in contact with the plate 56 whilst the straight section of hook plate 30 abuts flange 40 of the rave 38a or 38b. This prevents any lateral movement of the post 2. With the form of rave 38b shown in Figures 5 to 7, the hook head 36 is preferably so curved that the apex of the curve abuts the vertical section 42 of the rave 38b. This provides even greater restraint against lateral movement. Vertical movement is also prevented since the curved section 36 is located between the flange 40 and angled section 46 of the rave 38a or b.

The locking means is therefore relatively simple but provides a very positive locking action in that once the hook 18 has been latched to the socket 52 there is no tendency for it to unlatch. Further with the post 2 in the roof supporting position, the locking means prevents vertical and lateral movement of the post 2.

If the trailer is a curtain-sided trailer, that is, its sides and possibly ends are closed in use by curtains, the upper ends of the curtains are supported from the rails whilst the lower ends have tensioning straps attached thereto. These hook round the flange 40 of the rave 38a or b and can be tightened to pull the curtain taut. The edges of the curtain are tucked into the rave 38a or b against the vertical section 42. The hook 28 still allows the edges to be tucked away at the post locations since sufficient space is provided for them in the concave mouth defined by, curved section 36.

The hook 28 can be employed with any type of trailer rave as long as a socket is provided thereon. The rave 58 shown in Figure 8 is a "standard" rave as opposed to the ferry rave 38a of Figures 1 to 4 or 38b of Figures 5 to 7. This has a C cross-section. To provide a socket 52a on this, part of the web and upper flange of the rave 58 is removed. A plate 60 suitably bent to form a vertical section 62, an upwardly extending flange 64 spaced therefrom and angled section 66 connecting the two, is welded, see 68, to the rave 58 across the opening therein. The socket 52a is provided between the angled section 66 and flange 64. The spacing between the flange 64 and vertical section 62 is arranged so that, with the post 2 in the vertical position, the toe of the hook 28 abuts the vertical section 62 to thereby prevent lateral movement of the post 2. The flange 64 is provided for ease of manufacturing but it will be appreciated that the angled section 66 could be connected directly to the rave 58 in which case the length of the angled section 66 would be reduced to give the required abutting relationship between the hook 28 and the socket 52a defined by the rave 58 and the plate 60.

A bar 70 extends parallel to the rave 58 and is secured to the ends thereof. Alternatively a plate may be secured across the rave 58 at either end of the plate 60 to close off the section of the rave 58 which has the cut-out. The bar 70 can then suitably be secured between the end plates. The position of the bar 70 is equivalent to that of the end of the flange 40 of ferry rave 38a or b and it performs the same function, that is, it prevents vertical movement of the post 2 when in the support position.

A safety mechanism is provided for the post 2 which consists of a safety lock member 72, one end of which 74 is attached to the first arm 14 and the second end of which is formed with a hook 76. The safety lock member 72 is pivoted to the first arm 14 at its connection 74 so that, as the two arms 14 and 16 are moved apart when the bolt 20 has been released from the plate 26, the hooked end 76 of the safety lock member 72 swings down between the flanges of the second member 16. Further separation of the two arms 14 and 16 causes the hook end 76 to latch around a rod 78 connected between the flanges of the second arm 16 thus preventing the arms 14, 16 from moving further apart. The operator will realise that the second arm 16 has been checked and can reach behind to release the hook 76 from the rod 78 and then complete the opening.

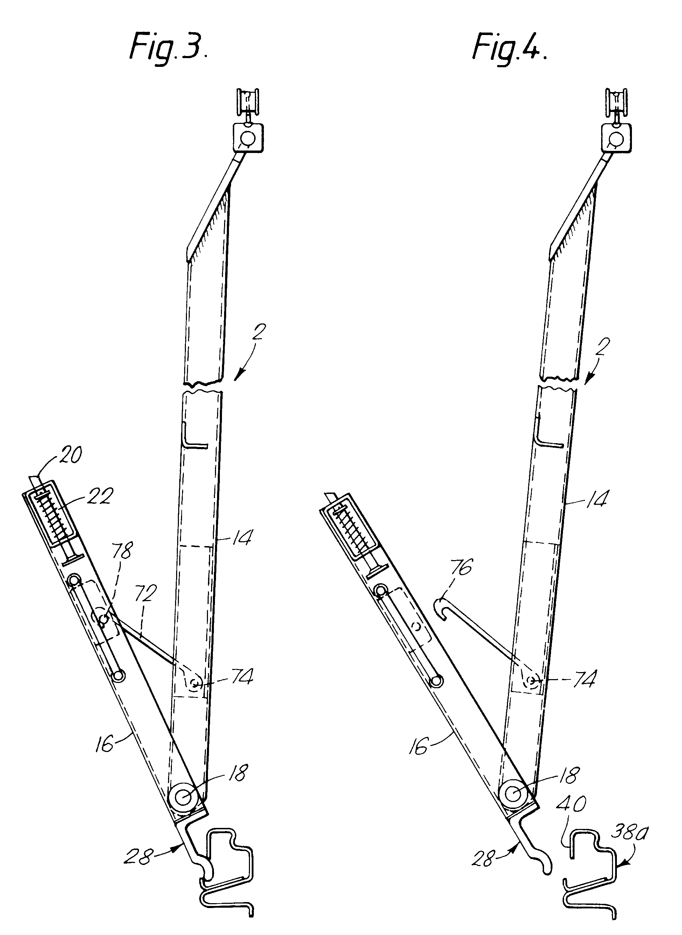

The hook end 76 of the safety lock member 72 moves out of the first arm 14 by way of an aperture therein which is dimensioned to arrest the hook 76, once released from the rod 78, in the position shown in Figure 4. When the two arms 14, 16 are swung together again, the second arm 16 pushes the safety lock member 72 back into a vertical position in the first arm 14 thus resetting the safety mechanism.

The initial force tending to separate the two arms 14, 16 when the post 2 is first released, is high and the second arm 16 tends to swing away fast from the first arm 14. This can be potentially dangerous. By providing the safety lock member 72 the maximum separation under this initial high force is limited and the operator of the post 2 is protected.

The use of a hook and socket alone to provide a locating and locking means makes the arrangement much simpler than known arrangements and therefore less expensive. Moreover, the arrangement has in use been found to function better than known arrangements.

## Claims

1. A trailer or semi-trailer having at least one roof support post (2), the upper end of which is connectable to an upper edge of trailer or semi-trailer and the lower end of which includes means (28) whereby it may be releasably locked to a bottom rave (38) of the trailer to secure the post in a vertical position in which it supports the roof of the trailer or semi-trailer, the locking means (28) cooperating with a socket (52, 52a) provided on the bottom rave (38, 58) to secure the post (2) in the roof supporting position and to prevent vertical movement of the post (2) in that position, and the post (2) comprising first and second arms (14, 16) which in the support position are both vertical, the upper end of the first arm (14) being connectable to an upper edge of the trailer or semi-trailer and the second arm (16) being pivotally connected, at or adjacent one end thereof, to the first arm (14), and a latching mechanism (20, 22, 24, 26) for securing the two arms (14, 16) together in vertical position, wherein the locking means (28) is provided on the lower end of the second arm (16) and cooperates with the socket (52, 52a) with the post (2) in a position at an angle to the vertical to hold the post (2) in a desired position along the trailer as the post (2) is moved into the vertical roof supporting position, characterised in that the locking means comprises a hook (28), the hook (28) comprising a plate or bar (30), a first end portion of which is secured to the post (2) and the other end portion of which is bent away at an angle to the plate or bar (30) and then back on itself to form a generally U or V shaped head (36), in that the head (36) of the hook (28) can be latched in the socket (52, 520) with the post (2) in a position at an angle to the vertical and in that the cooperation between the hook (28) and socket (52, 52a) is such as to prevent any lateral movement of the lower end of the post (2) when it is in vertical position.

2. A trailer or semi-trailer as claimed in Claim 1, wherein the first end portion of the plate or bar (30) is secured to the post (2) by being connected to, or formed integrally with, a connecting plate (32) attached across the bottom end of the post (2).

3. A trailer or semi-trailer as claimed in either Claim 1 or Claim 2, wherein the hook (28) is so dimensioned that, when the post (2) is in the vertical position, its free end and either the curved head (36) or the straight section of the plate or bar (30) abut respectively against opposed walls (40, 42, 46, 56, 62, 64, 66), which walls (40, 42, 46, 56, 62, 64, 66) comprise sections of the rave (38, 58) and/or walls of the socket (52, 52a).

4. A trailer or semi-trailer as claimed in any preceding Claim, wherein the socket (52) is provided on the rave (38) by welding a plate (56) thereto in a position such as to define the socket (52) between it and the rave (38).

5. A trailer or semi-trailer as claimed in any one of Claims 1 to 3, wherein the rave (58) is formed with a cut-out through which the hook (28) is passed, a plate (60) being secured between sections of the rave (58) on either side of the cut-out and being so configured as to define a socket (52a) for the hook (28).

6. A trailer or semi-trailer as claimed in either Claim 4 or Claim 5, wherein the plate (56, 60) extends the length of the rave.

7. A trailer or semi-trailer as claimed in any preceding Claim, including a safety lock member (72) provided on the first or second arm (14, 16), a portion (76) of which, on movement apart of the two arms (14, 16), becomes releasably secured to the other arm (14, 16) to thereby limit the amount by which the two arms (14, 16) may be separated.

## Patentansprüche

1. Ein Anhänger oder Halb-Anhänger, der über zumindest eine Dachstützpunktstange verfügt (2), deren oberes Ende mit einer oberen Ecke des Anhängers oder Halb-Anhängers verbindbar ist und deren unteres Ende Mittel (28) beinhaltet, wobei es lösbar an eine Bodenklammer (38) des Anhängers angeschlossen sein kann, um die Stange in einer vertikalen Position zu sichern, in der sie das Dach des Anhängers oder Halb-Anhängers stützt, die Anschlußmittel (28), zusammenwirkend mit einer Fassung (52, 52a), angebracht an die Bodenklammer (38, 58) zur Sicherung der Stange (2) in der Dachunterstützungsposition und zur Vorbeugung vor vertikaler Bewegung der Stange (2) in dieser Position, und die Stange (2) erste und zweite Arme (14, 16) aufweist, die in der Stützposition beide vertikal ausgerichtet sind, das obere Ende des ersten Arms (14) verbindbar ist mit einer oberen Ecke des Anhängers oder Halb-Anhängers und der zweite Arm (16) drehbar verbunden ist an oder anstoßend an ein Ende desselben mit dem ersten Arm (14), und ein Verklinkungsmechanismus (20, 22, 24, 26) zur Sicherung der zwei Arme (14, 16) miteinander in vertikaler Position , wobei die Anschlußmittel (28) an dem unteren Ende des zweiten Arms (16) angebracht sind und in Zusammenwirkung mit der Fassung (52,52a) mit der Stange (2) in einer Position in einem Winkel zu der Vertikalen stehen, um die Stange (2) in einer gewünschten Position entlang des Anhängers zu halten, wenn die Stange (2) in die vertikale Dachunterstützungsposition bewegt wird, dadurch gekennzeichnet, daß
die Anschlußmittel einen Hacken (28) aufweisen der Hacken (28) ein Blech oder einen Stab (30) beinhaltet, dessen erstes Endteil an dem Stab (2) gesichert ist und dessen anderes Endteil weg um einen Winkel zu dem Blech oder dem Stab (30) hin gekrümmt ist und dann zurück zu sich selbst, um ein gewöhnlich in U- oder in V-Form ausgebildetes Kopfteil (36) zu formen, daß das Kopfteil (36) des Hackens (28) in die Fassung (52, 52a) in einer Winkelposition zur Vertikalen mit der Stange (2) eingeklingt werden kann und daß das Zusammenwirken zwischen Hacken (28) und Fassung (52, 52a) dahingehend wirkt, daß jede seitliche Bewegung des unteren Endes der Stange (2) verhindert wird, wenn diese in vertikaler Position ist.

2. Ein Anhänger oder Halb-Anhänger gemäß Anspruch 1, wobei das erste Endteil des Blechs oder der Stange (30) an der Stange (2) gesichert ist durch Verbindung oder durch integrierte Form mit einem Verbindungsblech (32), befestigt über das Fußende der Stange (2).

3. Ein Anhänger oder Halb-Anhänger gemäß Anspruch 1 oder Anspruch 2, wobei der Hacken (28) so dimensioniert ist, daß, falls die Stange (2) in der vertikalen Position ist, sein freies Ende und entweder das gekrümmte Kopfteil (36) oder der gerade Bereich des Blechs oder des Stabs (30) jeweils an gegenüberliegenden Wänden (40, 42, 46, 56, 62, 64, 66) anstoßen, wobei die Wände (40, 42, 46, 56, 62, 64, 66) Bereiche der Klammer (38,58) und/oder Wände der Fassung (52, 52a) beeinhalten.

4. Ein Anhänger oder Halb-Anhänger gemäß einem der vorstehenden Ansprüche, wobei die Fassung (52) an der Klammer (38) durch Schweißen eines Blechs (56) in einer solchen Position vorgesehen ist, um die Fassung (52) zwischen diesem und der Klammer (38) zu definieren.

5. Ein Anhänger oder ein Halb-Anhänger gemäß einem der Ansprüche 1 bis 3, wobei die Klammer (58) mit einem Ausschnitt geformt ist, in den der Hacken (28) eingepaßt wird, ein Blech (60) zwischen Bereichen der Klammer (58) auf einer Seite des Ausschnitts gesichert ist und so ausgebildet ist, daß eine Fassung (52a) für den Hacken (28) definiert wird.

6. Ein Anhänger oder ein Halb-Anhänger gemäß Anspruch 4 oder Anspruch 5, wobei das Blech (56, 60) die Länge der Klammer verlängert.

7. Ein Anhänger oder ein Halb-Anhänger gemäß einem der vorstehenden Ansprüche, ein Sicherheitsschließbauteil (72) einschließend, vorgesehen an dem ersten oder zweiten Arm (14,16), ein Teil (76) dessen bei Bewegung weg von den zwei Armen (14,16) lösbar gesichert an dem anderen Arm (14,16) ist, um dort die Größe zu begrenzen, durch die die zwei Arme (14,16) getrennt werden können.

## Revendications

1. Remorque ou semi-remorque comprenant au moins un poteau (2) support du toit, dont l'extrémité supérieure peut être reliée à un bord supérieur de la remorque ou de la semi-remorque et dont l'extrémité inférieure comporte des moyens (28) de verrouillage de manière amovible à un dispositif inférieur d'amarrage (38) de la remorque pour maintenir le poteau dans une position verticale qui lui permet de supporter le toit de la remorque ou de la semi-remorque, les moyens de verrouiillage (28) coopérant avec une douille (52, 52a) située sur le dispositif inférieur d'amarrage (38, 58) pour maintenir le poteau (2) dans la position de support du toit et pour empêcher un mouvement vertical du poteau (2) lorsqu'il est dans cette position, et le poteau (2) comprenant un premier et un second bras (14, 16), lesquels, dans la position de support, sont tous deux verticaux, l'extrémité supérieure du premier bras (14) pouvant être reliée à un bord supérieur de la remorque ou de la semi-remorque et le second bras (16) étant relié à pivotement, par l'une de ses extrémités ou à proximité, au premier bras (14), et un mécanisme de loquet (20, 22, 24, 26) pour maintenir les deux bras (14, 16) ensemble dans la position verticale, les moyens de verrouillage (28) étant prévus à l'extrémité inférieure du second bras (16) et coopérant avec la douille (52, 52a) lorsque le poteau (2) est dans une position qui fait un certain angle avec la verticale pour maintenir le poteau (2) dans une position souhaitée le long de la remorque, tandis que le poteau (2) est déplacé vers sa position verticale de support du toit, caractérisée en ce que les moyens de verrouillage comprennent un crochet (28) comportant une plaque ou une barre (30), dont une première partie d'extrémité est fixée au poteau (2) et l'autre partie d'extrémité est cintrée sous un certain angle en s'éloignant de la plaque ou la barre (30) et revient sur elle-même pour former une tête (36) ayant généralement un profil en U ou en V, en ce que la tête (36) du crochet (28) peut être immobilisée dans la douille (52, 52a) alors que la position du poteau (2) définit un certain angle par rapport à la verticale et en ce que la coopération entre le crochet (28) et la douille (52, 52a) est telle qu'elle empêche tout mouvement latéral de l'extrémité inférieure du poteau (2) lorsqu'il se trouve dans la position verticale.

2. Remorque ou semi-remorque selon la revendication 1, dans laquelle la première partie d'extrémité de la plaque ou de la barre (30) est fixée au poteau (2) en étant reliée à une plaque de connexion (32) fixée en travers de l'extrémité inférieure du poteau (2) ou formée d'une pièce avec elle.

3. Remorque ou semi-remorque selon la revendication 1 ou 2, dans laquelle le crochet (28) est dimensionné de manière qu'au moment où le poteau (2) est dans la position verticale, son extrémité libre et, soit la tête cintrée (36), soit la partie rectiligne de la plaque ou de la barre (30) viennent respectivement buter contre des parois opposées (40, 42, 46, 56, 62, 64, 66), lesquelles parois (40, 42, 46, 56, 62, 64, 66) constituent des parties du dispositif d'amarrage (38, 58) et/ou des parois de la douille (52, 52a).

4. Remorque ou semi-remorque selon l 'une quelconque des revendications précédentes, dans laquelle la douille (52) est installée sur le dispositif d'amarrage (38) en soudant une plaque (56) sur ce dispositif dans une position qui permet de définir la douille (52) entre la plaque et le dispositif d'amarrage (38).

5. Remorque ou semi-remorque selon l'une quelconque des revendications 1 à 3, dans laquelle le dispositif d'amarrage (58) est constitué d'une découpe à travers laquelle passe le crochet (28), une plaque (60) étant fixée entre les parties du dispositif d'amarrage (58) de l'un ou l'autre côté de la découpe et étant configurée de manière à définir une douille (52a) pour le crochet (28).

6. Remorque ou semi-remorque selon l'une quelconque des revendications 4 ou 5, dans laquelle la plaque (56, 60) s'étend sur la longueur du dispositif d'amarrage.

7. Remorque ou semi-remorque selon l'une quelconque des revendications précédentes, comprenant un élément de serrure de sécurité (72) prévu sur le premier ou le second bras (14, 16) dont une partie (76), au cours du mouvement de séparation des deux brax (14, 16) se fixe de manière amovible sur l'autre bras (14, 16) pour limiter ainsi la distance dont les deux bras (14, 16) peuvent être séparés.
